(19) Europäisches Patentamt

European Patent Office

Office européen des brevets

(11) **EP 1 139 621 A2**

(12) **EUROPEAN PATENT APPLICATION**

(43) Date of publication:
**04.10.2001  Bulletin 2001/40**

(51) Int Cl.7: **H04L 25/03**

(21) Application number: **01107495.2**

(22) Date of filing: **29.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.03.2000  JP 2000094670**

(71) Applicant: **Hitachi Kokusai Electric Inc.
Tokyo (JP)**

(72) Inventors:
  • **Kokuryo, Yoshiro, Hitachi Kokusai Electric Inc.
    Kodaira-shi, Tokyo 187-851 (JP)**

  • **Tsukamoto, Nobuo, Hitachi Kokusai Electric Inc.
    Kodaira-shi, Tokyo 187-851 (JP)**
  • **Hamazumi, Hiroyukki,
    NHK Science Tech. Res. Labs.
    Setagaya-ku, Tokyo 157-8511 (JP)**

(74) Representative: **Altenburg, Udo, Dipl.-Phys.
Patent- und Rechtsanwälte
Bardehle - Pagenberg - Dost - Altenburg -
Geissler - Isenbruck,
Galileiplatz 1
81679 München (DE)**

(54) **Digital receiver with automatic equalisation**

(57)     A digital multilevel signal receiver circuit which can sufficiently improve transmission efficiency while suppressing a data transmission error, and an automatic equalization circuit for use in the digital multilevel signal receiver circuit. An equalization training automatic equalizer (23) is provided separately from a data reproducing equalizer (9) having equalization characteristics which can be set up. A received training signal is once stored in a memory (21, 23), read out from the memory and supplied to the equalization training automatic equalizer (23) so as to update tap coefficients of the equalizer. The updated tap coefficients are given to the data reproducing equalizer (9) so as to update equalization characteristics of the equalizer. A received data signal is equalized with the updated equalization characteristics.

FIG.1

**Description**

BACKGROUND OF THE INVENTION

The present invention relates to an equalization circuit in a demodulation circuit for demodulating a digital multilevel modulation signal, and particularly relates to an automatic equalization circuit of the type which automatically sets equalization characteristic, that is, frequency characteristic by use of a training signal, and a receiver circuit (demodulation circuit) using the automatic equalization circuit.

In any transmission system, including a signal transmission system based on a digital multilevel modulation system, it is the best thing to make waveform distortion, echo, or the like, as small as possible. Thus, conventionally, it has been known to apply an automatic equalizer to a demodulation circuit (receiver circuit) of a digital multilevel modulation system.

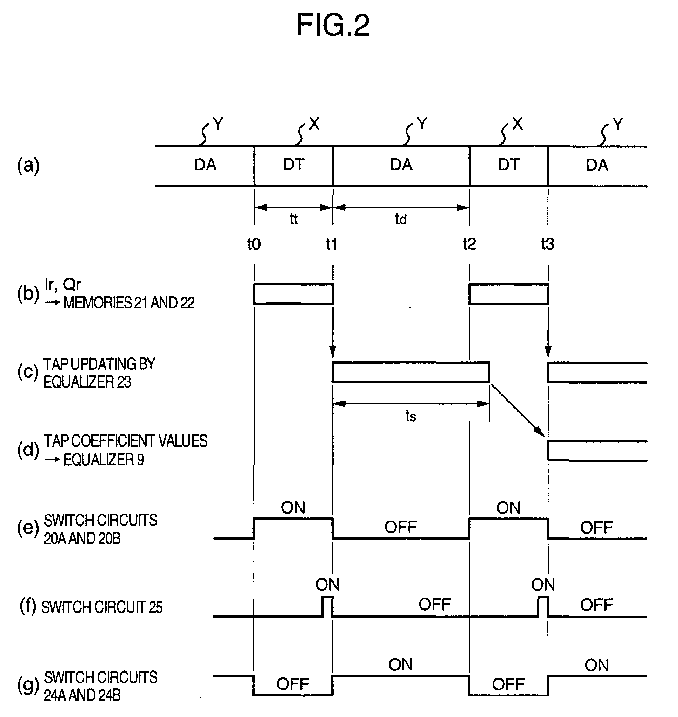

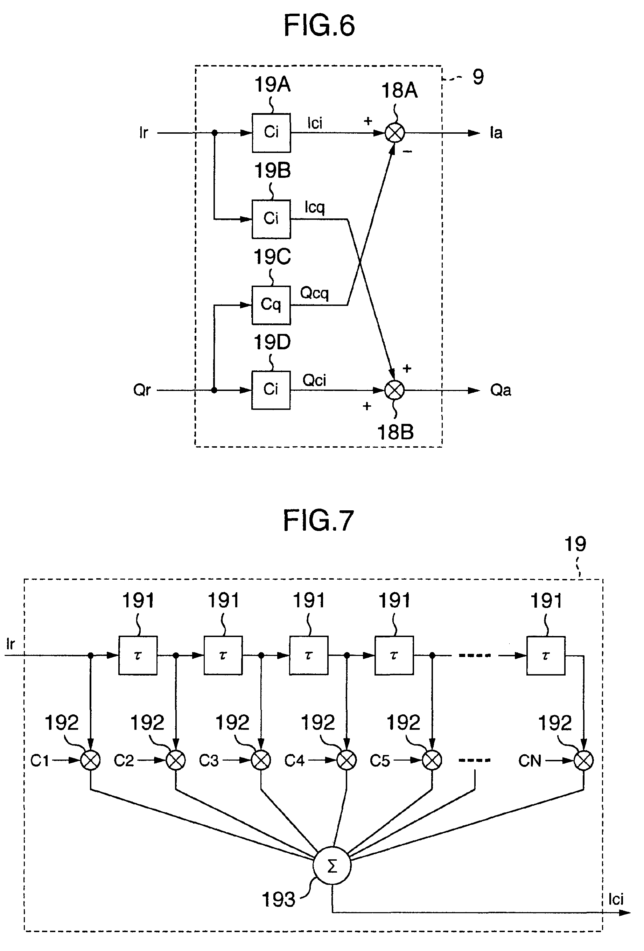

For example, such applications are disclosed by SHAHID U. H. QURESHI "ADAPTIVE EQUALIZATION" PROCEEDINGS OF THE IEEE, VOL. 73, NO. 9, SEPTEMBER 1985, pages 1349 and 1355; KAZUO MURANO and SHIGEYUKI UNAKAMI "DIGITAL SIGNAL PROCESSING IN INFORMATION/ COMMUNICATION", SHOKODO CO., LTD., NOVEMBER 25 1987, figure 2.24 in page 57; and THE INSTITUTE OF ELECTRONICS AND COMMUNICATION ENGINEERS OF JAPAN "APPLICATION OF DIGITAL SIGNAL PROCESSING", THE INSTITUTE OF ELECTRONICS AND COMMUNICATION ENGINEERS OF JAPAN, MAY 20 1981, figure 6.1 in page 150 and figure 6.21 in page 171.

SUMMARY OF THE INVENTION

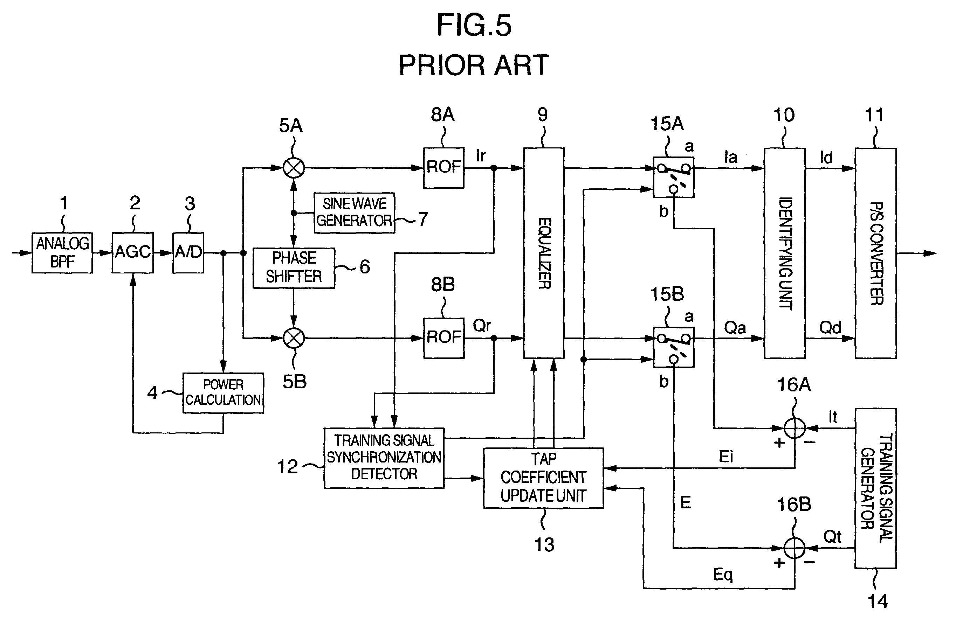

Description will be made about an example of an automatic equalization circuit in a demodulation circuit of a digital multilevel modulation system as mentioned above in the related art, with reference to a block diagram of Fig. 5. Fig. 5 is a diagram showing the whole configuration of the demodulation circuit (receiver circuit) of the digital multilevel modulation system.

In the demodulation circuit shown in Fig. 5, a received modulated wave signal of a carrier frequency $\underline{f}$ is first supplied to an analog BPF (Band Pass Filter) 1. After subjected to band width restriction in the analog BPF 1, the signal is adjusted to a fixed level by an AGC (Automatic Gain Control portion) 2 regardless of the level with which the signal was received. Then, the signal is supplied to an A/D converter (analog to digital converter) 3 so as to be converted into a digital signal. The digital signal is supplied to a reception power calculation portion 4 and multipliers 5A and 5B.

Then, the reception power calculation portion 4 calculates the level of the received signal on the basis of the digital signal supplied from the A/D converter 3. The calculated level is fed back to the control input of the AGC 2. Thus, a digital signal consequently having a fixed level is supplied to the A/D converter 3.

The digital signal supplied to the multipliers 5A and 5B is multiplied in the multipliers 5A and 5B respectively by a carrier signal of a frequency $\underline{f}$ supplied from a sine wave generator 7. Then, an in-phase component (I component) and a quadrature component (Q component) are extracted.

At this time, the carrier signal is supplied to the multiplier 5A directly from the sine wave generator 7 while the carrier signal which is phase-shifted by $\pi/2$ in a phase shifter 6 is supplied to the multiplier 5B. Thus, quadrature demodulation is carried out.

Here, the sine wave signal supplied to the multiplier 5A is expressed by cos ($\omega$t) and the sine wave signal supplied to the multiplier 5B is expressed by sin($\omega$t).

Incidentally, $\omega = 2\pi f$.

The in-phase component (I component) and the quadrature component (Q component) supplied from the multipliers 5A and 5B are wave-shaped by roll-off filters (ROFs) 8A and 8B, respectively, and extracted as output signals Ir and Qr. The output signals Ir and Qr are supplied to an equalizer 9 the equalization characteristics of which can be set up.

Then, data signals Ia and Qa equalized by the equalizer 9 are supplied to an identifying unit 10. The identifying unit 10 identifies a transmission point sent from the transmission apparatus side. This identification results are outputted as data signals Id and Qd. The data signals Id and Qd are converted into a serial signal by a P/S converter (Parallel-In Serial-Out Shift Register) 11. Thus, demodulated reception data is obtained.

Here, the equalizer 9 has a function of equalizing a received signal so as to eliminate influence of waveform distortion, echo, or the like, which may be given to a transmission signal on a transmission path. It is therefore necessary to set predetermined equalization characteristics on the equalizer 9 beforehand.

Here, the equalizer 9 is generally designed to carry out an operation with a complex number comprised of an in-phase component and a quadrature component. An example of such an equalizer 9 will be described with reference to Fig. 6.

The equalizer 9 shown in Fig. 6 is constituted by two adders 18A and 18B and four transversal filters 19A to 19D. The inputs and outputs of the equalizer 9 has a relation as follows.

Now, assume that respective tap coefficients of the respective transversal filters 19A to 19D are Ci and Cq as shown in Fig. 6. Further, assume that the values of the input signals Ir and Qr are expressed by Ir and Qr. Then, the relation among the value (Ir+j · Qr) of the input signal expressed by a complex signal number and the tap coefficients Ci and Cq can be expressed by:

$$(Ir+j \cdot Qr) \cdot (Ci+j \cdot Cq)=(Ir \cdot Ci-Qr \cdot Cq)+j \cdot (Ir \cdot Cq+Qr\cdot Ci)$$

Accordingly, the values of the output signals Ia and Qa can be expressed by the input signals Ir and Qr and the tap coefficients Ci and Cq as follows.

$$Ia=Ir \cdot Ci-Qr \cdot Cq$$

$$Qa=Ir \cdot Cq+Qr \cdot Ci$$

Thus, the characteristics of the output signals Ia and Qa with respect to the input signals Ir and Qr, that is, the transmission characteristics can be changed by changing the tap coefficients Ci and Cq.

Here, each of the transversal filters 19A to 19D of the equalizer 9 is generally constituted by (N-1) delay elements 191, N multipliers 192 and an adder 193 as shown in Fig. 7. The transmission characteristics of each of the transversal filters 19A to 19D are established by coefficients C1 to CN set in the multipliers 192, respectively. These coefficients are called tap coefficients. The equalization characteristics of the equalizer 9 are set by updating the tap coefficients.

Thus, the setting of the equalization characteristics is carried out as follows.

That is, a signal called a training signal having a predetermined format (for example, the same format as a training signal sent from the transmission apparatus side) is set as a reference signal in advance. Before the data transmission is started, the training signal is first made sent from the transmission apparatus side to the reception apparatus side. Thus, the above-mentioned equalization characteristics are set by use of the training signal. After the equalization characteristics have been set up, transmission of the data signal is carried out in earnest.

At this time, on the reception apparatus side, the received training signal is compared with a training signal generated in a training signal generator 14. The difference between the training signals is regarded as an error. The tap coefficients of the equalizer 9 are changed sequentially in accordance with the error. Thus, the equalizer 9 can equalize the distortion of the transmission path when the error becomes smallest.

To this end, a training signal synchronization detector 12, switch circuits 15A and 15B, and adders 16A and 16B are provided as shown in Fig. 5.

The training signal synchronization detector 12 may be formed by a correlator. An M-sequence PN pattern is generally used for the training signal. A part of the PN pattern is set as coefficients of the correlator. The output signals Ir and Qr of the roll-off filters 8A and 8B are supplied to the correlator so that the correlation is detected. If the patterns coincide with each other, a large correlation value is outputted. Conversely, if there is no correlation, that is, if the patterns do not coincide with each other, a small correlation value is outputted. The output of the correlator is compared with a predetermined threshold value by a comparator not shown. When the output exceeds the threshold value, it can be considered that a specific pattern of the training signal has been received. It is known beforehand where the specific pattern is located in the training signal. Thus, the frame layout of the received signal is found. As a result, the head position of the training signal will be found from the next frame.

Now, when the training signal is received and detected by the training signal synchronization detector 12, the switch circuits 15A and 15B are changed over to the contact b side respectively. At the same time, a detection signal is supplied to the tap coefficient update unit 13 so as to start to change the equalization characteristics as mentioned above.

As a result, when the training signal transmitted from the transmission apparatus side is being detected on the reception apparatus side, the output signals Ia and Qa of the equalizer 9 are supplied to the adders 16A and 16B. At the this time, training signals It and Qt having the same format as the training signal generated on the transmission apparatus side are supplied from the training signal generator 14 to the subtraction inputs of the adders 16A and 16B respectively.

Then, equalization error signals Ei and Eq which are differences between the outputs Ia and Qa of the equalizer 9 and the reference training signals It and Qt respectively are extracted from the outputs of the adders 16A and 16B. Thus, the tap coefficient update unit 13 receives these output signals of the adders 16A and 16B as the equalization error signals Ei and Eq so as to update the tap coefficients of the equalizer 9 sequentially in accordance with an equalization processing algorithm based on a predetermined least mean square method.

The tap coefficients means coefficients C1 to CN provided for the above-mentioned N multipliers 192 shown in Fig. 7. The respective tap coefficients C1 to CN are updated to minimize an equalization error value E in accordance with the following equation. Thus, the output signals Ia and Qa provided with required equalization can be obtained.

$$CN^{(T+1)} = CN^{(T)} - g \cdot X^* \cdot E$$

X*: conjugate complex number of inputted signals =Ir-j · Qr
E: Ei+j · Eq=(Ia-Id)+j · (Qa-Qd)
g: constant (scalar)
$CN^{(T)}$: tap coefficients C1 to CN at time T
$CN^{(T+1)}$: tap coefficients C1 to CN at time T+1

wherein j designates an imaginary part of complex number.

Incidentally, the algorithm for setting the equalization characteristics is known well in the art. For example, the details thereof are disclosed in HIROSHI MIYAKAWA et al. "DIGITAL SIGNAL PROCESSING", edited by THE INSTITUTE OF ELECTRONICS AND COMMUNICATION ENGINEERS OF JAPAN, November 1975, pages 231-243.

The processing for updating tap coefficient values by the tap coefficient updater 13 is carried out repeatedly in a period of 1/modulation rate. Thus, the equalization errors Ei and Eq are reduced sequentially, coming close to zero.

Accordingly, the equalization errors Ei and Eq take values small enough to eliminate influence of waveform distortion or the like which may be produced in accordance with the conditions of the transmission path. Thus, a signal received on the reception apparatus side is equalized by the equalizer 9 so that correct data can be reproduced and the optimum equalization characteristics can be obtained.

If such equalization characteristics can be obtained thus on the reception apparatus side, then the switch circuits 15A and 15B are changed over back to the contact a side respectively. Thus, the reception apparatus side moves to an operation for data transmission. At this time, on the transmission apparatus side, however, there is no way to know the point in time when the setting of the equalization characteristics is finished on the reception apparatus side.

Therefore, conventionally, in anticipation of time necessary for setting the equalization characteristics by use of a training signal on the reception apparatus side, a time length to send out the training signal is determined in advance. If the time has passed, the transmission apparatus side stops sending the training signal and moves to an operation for data transmission.

Then, when the training signal is thus interrupted, the interruption is detected by the training signal synchronization detector 12 on the reception apparatus side. In response thereto, the switch circuits 15A and 15B are changed over to the contact a side.

Accordingly, the data signals Ia and Qa are thereafter supplied to the identifying unit 10. As a result, the reception apparatus side moves to its ordinary data transmission operation so that a serial data signal is outputted from the P/S converter 11.

However, while the reception apparatus side is receiving a data signal after finishing the setting of the equalization characteristics of the equalizer 9 and moving to the data transmission processing, for example, a phase hit, an amplitude hit, outage, or the like, may appear to change the condition of the transmission path suddenly. In consequence of such a sudden change, the equalizer 9 may be out of the equalization condition and brought into a so-called divergence condition unfavorably.

At this time, if data transmission is carried out bidirectionally, the fact that the equalizer 9 has fallen into the divergence condition may be able to be transmitted from the reception apparatus side to the transmission apparatus side by some kind of method relating to the bidirectional data transmission. However, if data transmission is carried out unidirectionally, such a kind of method is also impossible.

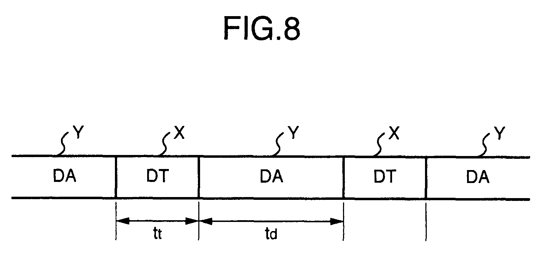

Therefore, conventionally, as shown in Fig. 8, a training signal DT is always transmitted at predetermined intervals so as to alternate with a target data signal DA, regardless of the equalization condition of the equalizer on the reception apparatus side. On the reception apparatus side, when the training signal DT is received, the processing for setting the equalization condition of the equalizer on the basis of the training signal DT is carried out even if the equalizer does not diverge.

When the equalizer diverges, correct data cannot be reproduced on the reception apparatus side. Thus, a bit error appears.

However, even if the equalizer diverges during the data signal transmission, a training signal is surely transmitted after a predetermined period. The equalization processing is carried out as soon as the next training signal sent in the next period is received. Thus, the equalizer can be restored to the equalization condition.

According to this conventional automatic equalization technique, even if the equalizer has fallen in a divergent state, a bit error on data signal transmission appears limitedly only during the period between the time when the next training signal is received and the time when the equalizer is restored to the equalization condition by the next training signal. Once the training signal is received and the equalizer is restored to the equalization condition, an error-free correct data signal can be reproduced.

However, in the above-mentioned conventional automatic equalization technique, no consideration is given to reduction in the transmission efficiency due to the transmission of the training signal. Thus, there is a problem that the data transmission error and the transmission efficiency have a so-called trade-off relationship in accordance with the transmission frequency of the training signal. That is, if one of the data transmission error and the transmission efficiency is suppressed, the other increases.

Conventionally, as described in Fig. 8, when the data signal DA is transmitted, the transmission is divided into sections every period Y, and the training signal DT is inserted between the sections. Here, in a period X when the training signal DT is transmitted, the data signal DA which is supposed to be transmitted cannot be transmitted. Thus, the data transmission efficiency is lowered correspondingly by the transmission of the training signal DT.

Now, as shown in Fig. 8, assume that the transmission time of one data signal DA in the period Y is td and the transmission time of one training signal in the period X is tt. Then, the transmission period of the training signal DT and data signal DA is expressed by (td+tt). Thus, the transmission efficiency is expressed by td/(td+tt). To increase the data signal transmission efficiency, it is necessary to make the transmission time tt of one training signal as short as possible and make the transmission period (td+tt) of the training signal as long as possible.

Here, the transmission time of one training signal can be shortened by the selection of the equalization algorithm and the number of taps of the equalizer. However, if the bit rate of data signal transmission is high and the transmission speed is high, the operation speed of hardware used for implementing the selected equalization algorithm cannot be ignored.

That is, equalization may be achieved by a short training signal theoretically according to a certain equalization algorithm. However, if the operation speed of hardware for implementing the equalization algorithm is slower than the length of the training signal, it is impossible to shorten the one training signal. Thus, it is necessary to set the training signal length to meet the operation speed of the hardware.

For example, if a complex type automatic equalizer has 30 taps in a system with a modulation rate of 13.5 Mega-baud and a least mean square method is used as equalization algorithm, it takes about 1 msec to 10 msec to attain the equalization condition.

If such length of time is required for training, the period of practical data transmission should be, however, made at least 10 times as long as the training time so as to prevent the data transmission efficiency from lowering extremely. If possible, it is ideal to make it at least 50 times to 100 times as long as the training time.

Here, for example, on the assumption that the data transmission time td is made 50 times as long as the training transmission time tt, the transmission efficiency reaches 98% (49÷50=0.98). Thus, the lowering of the efficiency due to the transmission of the training signal DT can be suppressed considerably.

However, if the data transmission time td is made too long, there is plenty of time before the next training signal is received. Thus, if the automatic equalizer diverges during data reception, a bit error continues for a long time on the reception apparatus side so that a data transmission error occurs frequently.

For example, on the assumption that the training transmission time tt needs a minimum of 1 msec as described above, the data transmission time td becomes a minimum of 50 msec to be considerably long. Thus, if an error occupies almost all the data transmission time td, there occurs a long bit error period.

Accordingly, in the above-mentioned conventional automatic equalization technique, the data transmission error and the transmission efficiency have a trade-off relationship. Thus, there arises a problem to cope with both the suppression of the data transmission error and the increase of the transmission efficiency.

It is an object of the present invention to provide an automatic equalization circuit in which a data transmission error is suppressed while transmission efficiency can be improved sufficiently.

It is another object of the present invention to provide a digital multilevel signal receiver circuit (demodulation circuit) in which a data transmission error is suppressed while transmission efficiency can be improved sufficiently.

To attain the first-mentioned object, according to an aspect of the present invention, there is provided an automatic equalization circuit for receiving a digital training signal and a digital data signal and outputting a digital data signal equalized, comprising: a first automatic equalization unit, to which the digital training signal and a digital data signal are supplied, for equalizing the digital data signal; a memory for storing the digital training signal; and a second automatic equalization unit coupled with said memory, for outputting an updating signal therefrom, the equalization characteristic of which is updated on the basis of said digital training signal from the memory, wherein the updating signal from the second automatic equalization unit is supplied to the first automatic equalization unit, so that the equalization characteristic of the first automatic equalization unit is updated.

According to another aspect of the present invention, there is provided an automatic equalization circuit for receiving a training signal and a data signal alternately and updating equalization characteristics automatically by use of the training signal, comprising: a data reproducing equalizer connected to receive the data signal and having equalization characteristics which can be set up; a memory for storing the training signal; and an equalization training automatic equalization portion connected to the memory; wherein every time the training signal is received, the training signal is stored in the memory, read out from the memory, and supplied to the equalization training automatic equalization portion so that the equalization characteristics of the automatic equalization portion are updated and the updated equalization characteristics are set in the data reproducing equalizer to thereby update the equalization characteristics of the data reproducing equalizer.

According to another aspect of the present invention, there is provided an automatic equalization circuit for receiving a training signal and a data signal alternately and updating equalization characteristics automatically by use of the training signal, comprising: a data reproducing equalizer connected to receive the data signal and having equalization characteristics which can be set up; and an equalization training automatic equalization portion connected to receive the training signal, to update equalization characteristics by use of the received training signal every time the training signal is received, and to set the updated equalization characteristics in the data reproducing equalizer; wherein equalizing of the data signal in the data reproducing equalizer and updating of the equalization characteristics of the equalization training automatic equalization portion are carried out in parallel, and every time the equalization characteristics of the equalization training automatic equalization portion are updated, the updated equalization characteristics are set in the data reproducing equalizer so that the equalization characteristics of the data reproducing equalizer are updated.

A delay circuit having a delay time the same as the time required for transmitting the training signal and the data signal per time may be provided for an input of the data reproducing automatic equalizer.

To attain the second-mentioned object, according to another aspect of the present invention, there is provided a receiver circuit for reproducing a training signal and a data signal modulated by a digital multilevel modulation system, comprising: a signal processing unit, to which the training signal and a data signal are supplied, for producting a digital training signal and a digital data signal; a first automatic equalization unit coupled with the signal processing unit, for equalizing the digital data signal, and outputting a digital data signal equalized; a memory coupled with the signal processing unit, for storing said digital training signal; and a second automatic equalization unit coupled with the memory, for outputting an updating signal therefrom, the equalization characteristic of which is updated on the basis of the digital training signal from the memory, wherein the updating signal from the second automatic equalization unit is supplied to the first automatic equalization unit, so that the equalization characteristic of the first automatic equalization unit is updated.

According to another aspect of the present invention, in a receiver circuit for receiving from a transmission circuit facing the receiving circuit an analog signal produced by D/A converting a training signal and the data signal modulated by a digital multilevel modulation system and for reproducing a data signal from the received analog signal, the training signal and the data signal being disposed alternately, the receiver circuit comprises: a receiver portion for receiving and demodulating the analog signal so as to produce a digital training signal and a digital data signal; an automatic equalization circuit connected to an output of the receiver portion, receiving the digital training signal and the digital data signal alternately, automatically updating equalization characteristics by use of the training signal, and equalizing the digital data signal by use of the updated equalization characteristics; an identifying unit connected to an output of the automatic equalization circuit; and a parallel/serial converter connected to an output of the identifying unit and outputting the reproduced data signal; wherein the automatic equalization circuit includes: a data reproducing equalizer connected to receive the digital data signal from the receiver portion and having equalization characteristics which can be set up; a memory for storing the digital training signal from the receiver portion; and an equalization training automatic equalization portion connected to the memory; wherein every time when the digital training signal is received, the training signal is stored in the memory, read out from the memory, and supplied to the equalization training automatic equalization portion so that the equalization characteristics of the automatic equalization portion are updated and the updated equalization characteristics are set in the data reproducing equalizer to thereby update the equalization characteristics of the data reproducing equalizer.

According to the present invention, on the assumption that it takes much time to update the tap coefficient values of the equalizer, the data transmission efficiency is prevented from lowering, and the time required for restoring the equalization condition of the equalizer can be shortened even if the equalizer diverges. Thus, a bit error can be reduced on the reception apparatus side.

That is, the transmission time for the training signal is made shorter than the time required for updating the tap coefficient values of the equalizer and at the same time long enough to transmit a training signal data amount necessary for an equalization algorithm. Thus, the time for the training signal is made a shortest possible time, so that the data transmission period is set to be a period which can bring about a higher transmission efficiency.

In an embodiment, a received training signal is once stored in a memory, and an automatic equalization portion including an equalization training equalizer is provided separately from a data reproducing equalizer. Tap coefficients of the equalization training equalizer are updated by use of information stored in the memory. This updating processing is carried out in parallel with data reception. Accordingly, data can be received at the same time.

Then, when the next training signal is received, the tap coefficient values with which the equalization training equalizer comes into equalization condition are written into the taps of the data reproducing equalizer respectively.

Thus, the tap coefficients of the data reproducing equalizer are updated adaptively after a delay of one period.

Thus, the data transmission efficiency is not lowered, and the equalizer on the reception apparatus side is restored from divergence earlier. The period when a bit error appears can be shortened thus.

In addition, since the tap coefficients are updated adaptively, variation with time in the characteristics of the transmission path can be tracked. Thus, correct data transmission can be carried out while equalization condition is always kept.

BRIEF DESCRIPTION OF THE DRAWINGS

The foregoing and other objects, features, and advantages of the invention will be apparent from the following more particular description of the embodiments of the invention as illustrated in the accompanying drawings wherein:

Fig. 1 is a block diagram showing the configuration of an embodiment of a receiver circuit (demodulation circuit) according to the present invention;
Fig. 2 is a timing chart for explaining the operation of the embodiment in Fig. 1;
Fig. 3 is a block diagram showing the configuration of another embodiment of a receiver circuit according to the present invention;
Fig. 4 is a timing chart for explaining the operation of the embodiment in Fig. 3;
Fig. 5 is a block diagram showing an example of a receiver circuit according to the prior art;
Fig. 6 is a block diagram showing an example of an equalizer in a demodulation circuit of a digital multilevel signal;
Fig. 7 is a block diagram showing an example of a transversal filter which is a constituent element of the equalizer in Fig. 6; and
Fig. 8 is an explanatory view showing an example of a signal which is a target of a digital multilevel signal demodulation circuit (receiver circuit).

DESCRIPTION OF THE EMBODIMENTS

Embodiments of the present invention will be described below with reference to the drawings. Similar parts are referenced correspondingly in the drawings.

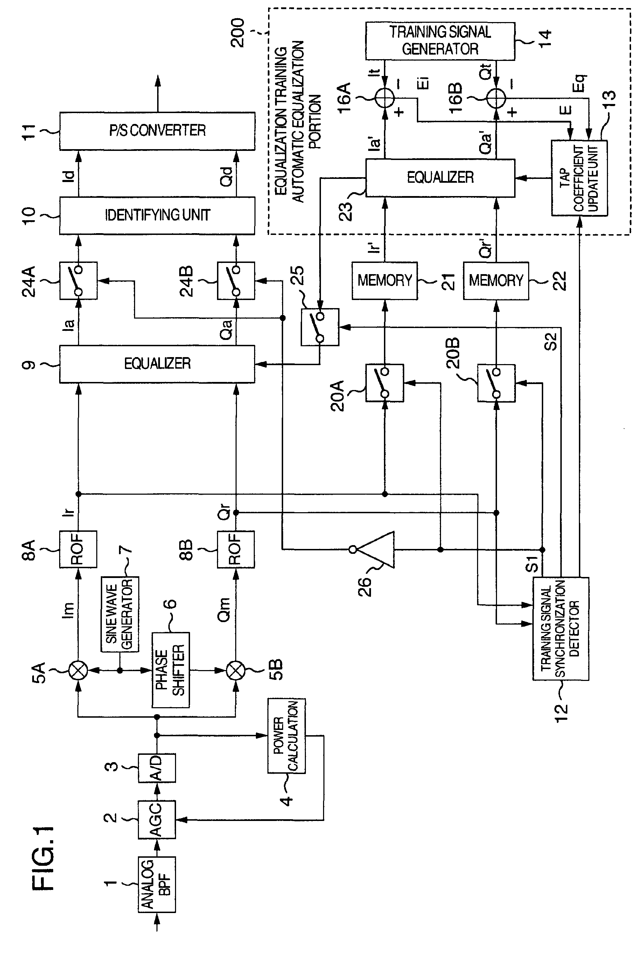

Fig. 1 shows a digital multilevel signal receiver circuit (demodulation circuit) including an automatic equalization circuit according to an embodiment of the present invention. Blocks 9, 12, 13, 14, 16A, 16B, 20A, 20B, 21, 22, 23, 24A, 24B, 25 and 26 constitute the automatic equalization circuit.

Incidentally, the configuration from an analog BPF 1 to a P/S converter 11, that is, the configuration constituted by the analog BPF 1, an AGC 2, an A/D converter 3, a reception power calculation portion 4, multipliers 5A and 5B, a phase shifter 6, a sine wave generator 7, roll-off filters 8A and 8B, an identifying unit 10 and the P/S converter 11 is the same as that of the receiver circuit in Fig. 5.

The analog BPF 1, the AGC 2, the A/D converter 3, the reception power calculation portion 4, the multipliers 5A and 5B, the phase shifter 6, the sine wave generator 7 and the roll-off filters 8A and 8B constitute a receiver portion.

Further, similarly to Fig. 5, a modulated wave signal of a carrier frequency $\underline{f}$ supplied to the analog BPF 1 is obtained as a demodulated reception data signal from the P/S converter 11. At this time, further, a training signal synchronization detector 12, a tap coefficient update unit 13 and a training signal generator circuit 14 are provided. As a result, equalization characteristics of an equalizer 9 is set up so that correct reception data is demodulated.

The embodiment in Fig. 1 has a first different point from the circuit shown in Fig. 5 as follows. That is, if a training signal appears in the outputs of the roll-off filters 8A and 8B, the training signal is once stored in memories 21 and 22 as buffer storage. To this end, switch circuits 20A and 20B are provided. Incidentally, FIFO (First-In First-Out) memories, RAMs, or the like, may be used for the memories 21 and 22.

Next, the embodiment in Fig. 1 has a second different point from the circuit shown in Fig. 5 as follows. That is, an equalizer 23 for equalization training is provided separately from the equalizer 9 having the same arrangement as the data-reproducing equalizer 9. The tap coefficient update unit 13, adders 16A and 16B and the training signal generator circuit 14 are connected to the equalizer 23 so as to constitute an equalization training automatic equalization portion 200. Incidentally, this classification is merely expedient. For example, the memories 21 and 22 may be included in the equalization training automatic equalization portion.

First, the training signal read out from the memories 21 and 22 is supplied to the equalizer 23 at a predetermined point of time. The tap coefficient update unit 13 is operated to update the tap coefficients of the equalizer 23 until a predetermined equalization condition can be obtained.

As a result of such training processing by the equalizer 23, the tap coefficients are updated so that the predetermined equalization condition is obtained. Then, the tap updating result is given to the equalizer 9. At this point in time, the tap coefficients of the equalizer 9 are set so that a resulted equalization condition can be obtained.

To this end, switch circuits 24A and 24B, on one hand, are provided. By the switch circuits 24A and 24B, output signals Ia and Qa of the equalizer 9 are separated from the inputs of the identifying unit 10 while the training signal is being received. On the other hand, a switch 25 is also provided. By the switch 25, the tap coefficient setting result set on the equalizer 23 is given to the equalizer 9 at a predetermined point in time.

Accordingly, the switch circuits 20A and 20B are controlled by the training signal synchronization detector 12 to be closed only while the training signal is being detected. In an opposite relation with the switch circuits 20A and 20B, the switch circuits 24A and 24B are controlled by the existence of an inversion circuit 26 so as to be opened only while the training signal is being detected. The operation timing of the switch circuit 25 will be described later.

Next, description will be made about the operation of the embodiment in Fig. 1 with reference to the timing chart of Fig. 2.

First, in this embodiment, in the same manner as in Fig. 5, a training signal DT and a data signal DA are transmitted alternately periodically in a period tt and in a period td, respectively, on the transmission apparatus side, as shown in Fig. 8.

Accordingly, when a data transmission operation is started, the training signal DT and the data signal DA are received alternately as shown in Fig. 2(a).

Here, a period X designates a period when the training signal DT is being received, and a period Y designates a period when the data signal DA is being received.

Then, the training signal synchronization detector 12 operates in accordance with the received signals in Fig. 2(a) as follows. That is, as shown in Fig. 2(e), when the training signal DT is being detected, the training signal synchronization detector 12 generates a control signal S1 which turns ON the switch circuits 20A and 20B, while the data signal DA is being received, the training signal synchronization detector 12 generates a control signal S1 which turns OFF the switch circuits 20A and 20B. As shown in Fig. 2(g), the inversion circuit 26 generates a control signal which turns ON/OFF the switch circuits 24A and 24B. Further, the detector 12, as shown in Fig. 2(f), generates a control signal S2 so that the control signal S1 is made to be ON in a pulse-like fashion immediately before the control signal S1 turns OFF from ON.

Thus, the respective switch circuits have operation timings respectively just as shown in (e), (f) and (g) of Fig. 2.

Incidentally, here, to facilitate understanding, description will be made on the assumption that signal transmission is started at time t0 as illustrated, and a demodulation operation is started therefrom.

First, the switch circuits 20A and 20B are turned ON at the time t0 as shown in Fig. 2(e).

As a result, in the period X when the training signal DT is being received, output signals Ir and Qr of the roll-off filters 8A and 8B are supplied to the memories 21 and 22. Thus, the training signal DT is stored in the memories 21 and 22 from the time t0.

Then, the training signal synchronization detector 12 receives the output signals Ir and Qr of the roll-off filters 8A and 8B. While the training signal DT is being received, the training signal synchronization detector 12 stores the output signals Ir and Qr of the roll-off filters 8A and 8B into the memories 21 and 22 synchronously with the training signal DT as shown in Fig. 2(b).

On the other hand, at this time, output signals Ia and Qa of the equalizer 9 can not be supplied to the identifying unit 10 because the switch circuits 24A and 24B are turned OFF, as shown in Fig. 2(g).

Next, following the period X, in the period Y when the next data signal DA is being received, first, the tap coefficient update unit 13 starts to operate at illustrated time t1 in response to instructions from the training signal synchronization detector 12. Then, as shown in Fig. 2(c), the tap coefficient update unit 13 can carry out the tap updating processing with data signals Ir' and Qr' read out from the memories 21 and 22 in a period ts regardless of the length of the period DT, differently from the above-mentioned conventional example in Fig. 5. Thus, the training processing is carried out by the equalizer 23.

Then, the tap coefficients are updated by the tap coefficient updater 13 until tap coefficients minimizing the differences between the output signals Ia' and Qa' of the equalizer 23 and reference training signals It and Qt are obtained. The output signals Ia' and Qa' are obtained based on the data signals Ir' and Qr' of the training signal DT read out from the memories 21 and 22 at this time, while the reference training signals It and Qt are supplied from the training signal generator 14. Each of the difference becomes smallest when the processing time ts has passed. Thus, the processing of updating the tap coefficients is terminated.

In addition, in the period Y, the switch circuits 24A and 24B are turned ON as shown in Fig. 2(g). Thus, the output signals Ia and Qa of the equalizer 9 are supplied directly to the identifying unit 10. As a result, data demodulated from the data signal DA from the time t1 is outputted from the P/S converter 11.

Then, at time t3, that is, at a time after the transmission of the training signal DT from the time t2 is terminated and immediately before the next period Y starts, the switch circuit 25 is closed again for a short time as shown in Fig. 2(f). By this time t3, updating of the tap coefficients by use of the equalizer 23 has been finished as shown in Fig. 2(c).

At this time, the tap coefficient updating result is set in the equalizer 9 through the switch circuit 25. As a result, the data signal DT subjected to correct equalization by the equalizer 9 is then demodulated and outputted from the P/S converter 11.

Then, after the time t3, the above-mentioned operation from the time t1 to the time t3 is repeated again.

Thus, in the demodulation circuit in Fig. 1, whenever the training signal DT appears, the tap coefficients of the equalizer 23 are updated by the just preceding training signal DT. This tap coefficient updating result is given to the equalizer 9 whenever the just succeeding training signal DT appears. Thus, such a tap coefficient updating operation is repeated.

As a result, according to this embodiment, even if the equalizer 9 is in the divergent condition during data transmission, a bit error caused by the divergence is limited in a period till the next training signal DT is received. After the next training signal has been received, error-free correct data can be reproduced again.

In this demodulation circuit, as is apparent from Fig. 2, it is found that the tap coefficient updating time ts carried out by the tap coefficient update unit 13 is not limited to be within the reception period tt of the training signal DT but can be made longer than the reception period tt. The tap coefficient updating time ts may be longer than the transmission period td of the data signal DA so as to have a length close to the sum of those periods (tt+td).

When the training signal DT stored in the memories 21 and 22 are read out therefrom as the data signals Ir' and Qr', the read-out rate may be made to meet the updating rate with which the tap coefficient update unit 13 updates the tap coefficients. Accordingly, even if the updating rate with which the tap coefficient update unit 13 updates the tap coefficients is so slow that the tap coefficients cannot be updated by the throughput in the transmission period tt of the training signal DT, it is possible to deal with such a case sufficiently without any problem.

The length of the period for the training signal depends, in principle, on an equalization algorithm. Generally, however, the length is rather determined on the basis of the length of the processing time of the tap coefficients which is much longer than the period for the training signal. However, according to the present invention, the period tt for the training signal DT can be shortened regardless of the updating time ts even if the updating time ts is long. As a result, although the transmission period tt of the training signal DT cannot be made shorter than the length determined in accordance with the equalization algorithm, but it can be made much shorter than the transmission period td of the data signal DA.

As a result, according to this embodiment, the transmission period tt of the training signal DT can be shortened sufficiently in accordance with the data modulation rate without limiting the tap coefficient updating rate which is carried out by the tap coefficient update unit 13. Thus, the transmission efficiency can be improved sufficiently.

Here, a specific example will be described about the data transmission error and the transmission efficiency in this embodiment.

First, assume that the data modulation rate is 13.5 Mega-baud, and 256 symbols are assigned to the training signal, while 18,944 symbols are assigned to the data signal.

Then,

$$tt=256/13.5\text{Mega-baud}=18.96\ \mu\ sec$$

$$td=18944/13.5\text{Mega-baud}=1403\ \mu\ sec$$

Thus, data transmission efficiency $\eta$ is expressed by:

$$\eta=td/(td+tt)=18944\div(18944+256)=98.7\%$$

It is therefore possible to obtain extremely high data transmission efficiency substantially close to 100%.

On the other hand, if the equalizer diverges so that all the data cannot be transmitted correctly, the period when a data error continues is equal to the period assigned to the data signal.

In this case, the data-error-continuing period is a maximum of 1.4 msec ($\fallingdotseq$1403 $\mu$ sec). Thus, the data-error-continuing period can be limited to a sufficiently short period.

On the other hand, according to the case of Fig. 5, the period for the training signal needs 1 to 10 msec as mentioned above. Now, assume that the period is 5 msec. Then, to make the data transmission efficiency $\eta$ be 98.7% equal to that in this embodiment, it is necessary to set one data transmission period to be 370 msec (=5msec$\times$(18944$\div$256)).

Then, when all the data cannot be transmitted correctly, a data error continues for a long time of 370 msec in the related art.

To make this data-error-generating period equal to that in this embodiment, it is necessary to set the data transmission period to be 1.4 msec. However, since the training signal period is 5 msec as mentioned above, the data transmission efficiency is extremely lowered to be 21.9% (=1.4÷(5+1.4)).

Therefore, according to this embodiment, it is possible to prevent the data transmission error from increasing and it is possible to improve the transmission efficiency sufficiently.

In addition, according to this embodiment, the training signal is transmitted repeatedly in a period of 1.4 msec. It is therefore possible to sufficiently track a change in characteristics of the transmission path. Thus, accurate equalization characteristics can be always kept easily.

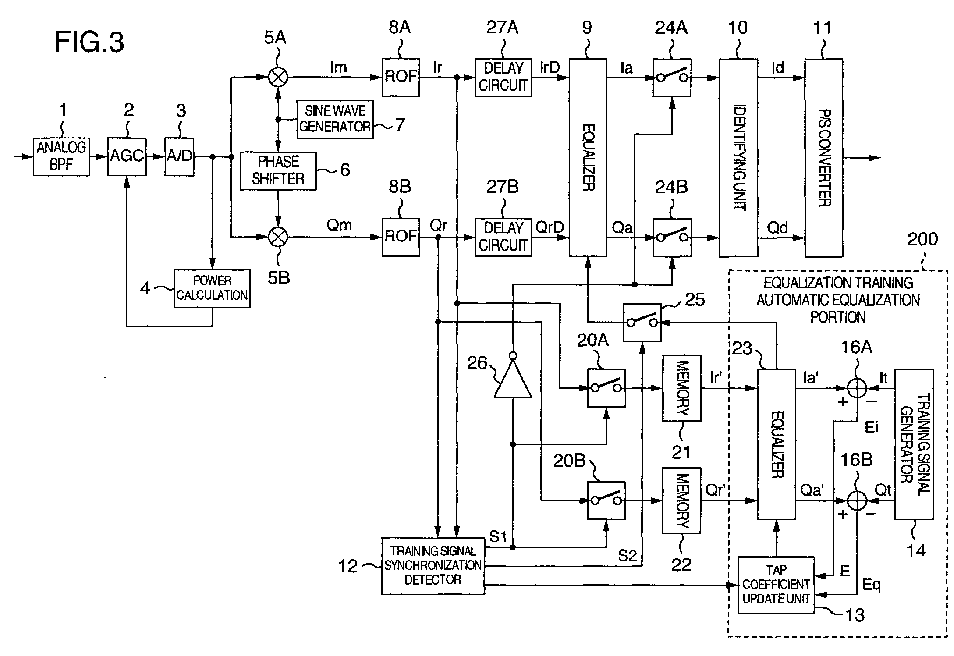

Next, description will be made about another embodiment of the present invention with reference to Fig. 3.

This embodiment in Fig. 3 is similar to the embodiment in Fig. 1, except that delay circuits 27A and 27B are inserted between the roll-off filters 8A and 8B and the equalizer 9 respectively as shown in Fig. 3.

The delay circuits 27A and 27B have predetermined delay time $\tau$ respectively. The delay circuits 27A and 27B give the predetermined time $\tau$ to the output signals Ir and Qr of the roll-off filters 8A and 8B respectively so as to supply the signals as delayed output signals IrD and QrD to the equalizer 9.

Here, the predetermined delay time $\tau$ is set to be the time required for transmitting one frame of data signals, that is, the transmission time of the training signal DT and the data signal DA per time, that is, $\tau$=tt+td (see Fig. 8).

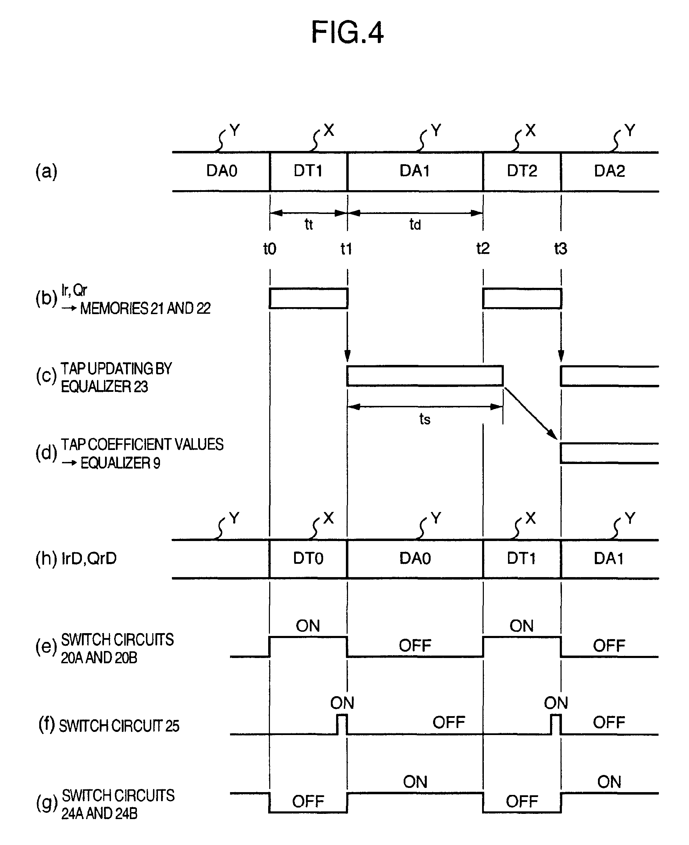

Next, description will be made about the operation of this embodiment in Fig. 3 with reference to the timing chart of Fig. 4.

Here, the timing chart of Fig. 4 is similar to the timing chart of Fig. 2, except that a timing chart of the output signals IrD and QrD of the delay circuits 27A and 27B is added as Fig. 4(h).

Further, in order to facilitate description, suffix numbers 0, 1, 2, ..... are given to the training signals DT and the data signals DA shown in Fig. 4(a). Corresponding thereto, suffix numbers 0, 1, 2, ..... are also given to the training signals DT and the data signals DA in Fig. 4(h). Those suffix numbers show the fact that signals having the same number in (a) and (h) of Fig. 4 are corresponding to each other.

Now, assume that a training signal DT1 is outputted from the roll-off filters 8A and 8B at time t0 in Fig. 4(a). The training signal DT1 is stored in the memories 21 and 22 as shown in Fig. 4(b). As a result, equalization convergence processing, that is, tap coefficient updating is carried out by the equalizer 23 as shown in Fig. 4(c). Tap coefficient values obtained thus are written into the equalizer 9 via the switch circuit 25 at time t3 as shown in Fig. 4(d).

However, the output signals IrD and QrD delayed by one frame by the delay circuits 27A and 27B are supplied to the equalizer 9. Thus, the tap coefficient values are written into the equalizer 9 while the training signal DT1 and a data signal DA1 following the training signal DT1 in the delayed output signals IrD and QrD synchronize with the training signal DT1 used for updating the tap coefficients and a data signal DA1 following the training signal DT1.

In this case, the time for one frame is required for the tap coefficient updating processing. Equivalently, as soon as equalization convergence has been attained by the training signal DT1, the tap coefficient updating processing is given in the form that the equalization characteristics are immediately reflected in the data signal DA1 in one and the same frame. Thus, according to this embodiment in Fig. 3, in accordance with the result of the tap coefficient updating processing with the training signal DT, the data signal DA in one and the same frame can be immediately equalized in every frame.

In the embodiment in Fig. 1, at a point of time, for example, when an equalization convergence operation is carried out with the training signal DT1 received at the time t0, it takes time for updating calculation of the operation. Therefore, the time when the calculated tap coefficient values are reflected on the equalizer 9 is the time when a data signal DA2 in the next frame is transmitted. Thus, the tap coefficient values are updated after a delay by one frame.

Such a delay has no problem if the characteristics of the transmission path does not change much. However, when the transmission path changes in a short period, equalization characteristics in accordance with the converged tap coefficient values obtained from the signal in the preceding frame cannot track the change of the transmission path in time. Thus, there is a feasibility that accurate equalization cannot be obtained. In this embodiment in Fig. 3, however, the change of the transmission path is reflected in the equalization characteristics at once. Thus, the equalization characteristics can track the change of the transmission path sufficiently.

According to this embodiment in Fig. 3, therefore, the tap coefficient values can be set in the equalizer synchronously with a received signal. As a result, the tracking characteristics can be improved on a large scale. Even if the characteristics of the transmission path changes a lot, it is still possible to always reproduce correct data easily.

The delay time $\tau$ of the delay circuits 27A and 27B was set to be one frame of transmission time in the above description. However, on some occasion, the delay time must be set to be two or more frames because of the relation between the length of the frame and the time required for updating the tap coefficient values. In such a case, the delay time of the delay circuits 27A and 27B may be elongated to meet the required time.

According to the above-mentioned embodiments, even if it takes much time for processing of calculation for updating the tap coefficients of the equalizer, it is not necessary to elongate the training signal. Thus, the transmission efficiency can be improved sufficiently while few data error is caused. In addition, it is possible to obtain equalization characteristics which can sufficiently track a change in the characteristics of the transmission path. As a result, it is possible to easily provide a highly reliable high-performance digital multilevel signal demodulation circuit.

**Claims**

1. An automatic equalization circuit for receiving a digital training signal and a digital data signal and outputting a digital data signal equalized, comprising:

   a first automatic equalization unit (9), to which said digital training signal and a digital data signal are supplied, for equalizing said digital data signal;
   a memory (21, 22) for storing said digital training signal; and
   a second automatic equalization unit (13, 14, 16A, 16B, 23;200) coupled with said memory, for outputting an updating signal therefrom, the equalization characteristic of which is updated on the basis of said digital training signal from said memory, wherein said updating signal from said second automatic equalization unit is supplied to said first automatic equalization unit, so that the equalization characteristic of said first automatic equalization unit is updated.

2. An automatic equalization circuit according to Claim 1, wherein said second automatic equalization unit includes an equalizer (23) having a configuration substantially the same as an equalizer (9) of said first automatic equalization unit.

3. An automatic equalization circuit according to Claim 1, wherein, said digital training signal and digital data signal are supplied to said first automatic equalization unit through a delay circuit (27A, 27B), the delay time of which is predetermined.

4. An automatic equalization circuit according to Claim 1, wherein said digital training signal is read out from said memory in accordance with a processing rate of said second automatic equalization unit.

5. An automatic equalization circuit according to claim 1, wherein said first automatic equalization unit receives said digital training signal and said digital data signal, alternately.

6. An automatic equalization circuit according to Claim 1, wherein said memory is a FIFO memory.

7. An automatic equalization circuit according to Claim 1, wherein said memory is a RAM.

8. A receiver circuit for reproducing a training signal and a data signal modulated by a digital multilevel modulation system, comprising:

   a signal processing unit (1-4, 5A, 5B, 6, 7, 8A, 8B), to which said training signal and a data signal are supplied, for producing a digital training signal and a digital data signal;
   a first automatic equalization unit (9) coupled with said signal processing unit, for equalizing said digital data signal, and outputting a digital data signal equalized;
   a memory (21, 22) coupled with said signal processing unit, for storing said digital training signal; and
   a second automatic equalization unit (13, 14, 16A, 16B, 23;200) coupled with said memory, for outputting an updating signal therefrom, the equalization characteristic of which is updated on the basis of said digital training signal from said memory, wherein said updating signal from said second automatic equalization unit is supplied to said first automatic equalization unit, so that the equalization characteristic of said first automatic equalization unit is updated.

9. A receiver circuit according to Claim 8, wherein said second automatic equalization unit includes an equalizer (23) having a configuration substantially the same as an equalizer (9) of said first automatic equalization unit.

10. A receiver circuit according to Claim 8, further comprising a delay circuit (27A, 27B) coupled between said signal processing unit and said first automatic equalization unit, the delay time of which is predetermined.

**11.** A receiver circuit according to Claim 8, wherein said first automatic equalization unit receives said digital training signal and said digital data signal, alternately.

**12.** A receiver circuit according to Claim 8, wherein said digital training signal is read out from said memory in accordance with a processing rate of said second automatic equalization unit.

**13.** A receiver circuit according to Claim 8, wherein said memory is a FIFO memory.

**14.** A receiver circuit according to Claim 8, wherein said memory is a RAM.

FIG.1

# FIG.2

(a)

| Y | X | Y | X | Y |
|---|---|---|---|---|
| DA | DT | DA | DT | DA |

tt    td

t0    t1    t2    t3

(b) Ir, Qr
→ MEMORIES 21 AND 22

(c) TAP UPDATING BY
EQUALIZER 23

ts

(d) TAP COEFFICIENT VALUES
→ EQUALIZER 9

(e) SWITCH CIRCUITS
20A AND 20B        ON        OFF        ON        OFF

(f) SWITCH CIRCUIT 25        ON        OFF        ON        OFF

(g) SWITCH CIRCUITS
24A AND 24B        OFF        ON        OFF        ON

FIG.3

EP 1 139 621 A2

# FIG.4

(a)

| DA0 | DT1 | DA1 | DT2 | DA2 |

tt    td

t0   t1   t2   t3

(b) Ir, Qr → MEMORIES 21 AND 22

(c) TAP UPDATING BY EQUALIZER 23

ts

(d) TAP COEFFICIENT VALUES → EQUALIZER 9

(h) IrD, QrD

| DT0 | DA0 | DT1 | DA1 |

(e) SWITCH CIRCUITS 20A AND 20B — ON / OFF / ON / OFF

(f) SWITCH CIRCUIT 25 — ON / OFF / ON / OFF

(g) SWITCH CIRCUITS 24A AND 24B — OFF / ON / OFF / ON

# FIG.5
## PRIOR ART

EP 1 139 621 A2

# FIG.6

# FIG.7

# FIG.8